# DEMANDE DE BREVET EUROPEEN

(11) **EP 2 942 102 A1**
(43) Date de publication de la demande: **11.11.2015**
(21) Numéro de dépôt: 14305659.6
(22) Date de dépôt: 05.05.2014
(51) Int. Cl.: B01J 37/03, B01J 23/889, B01J 21/06, B01D 53/86

(54) **Procédé de fabrication d'un catalyseur de dénitrification, ainsi que catalyseur de dénitrification correspondant et procédé de dénitrification utilisant un tel catalyseur**

(71) Demandeur: LAB SA, 69007 Lyon (FR)
(72) Inventeur: Siret, Bernard, 69200 Venissieux (FR); Tabaries, Franck, 83430 Saint Mandrier Sur Mer (FR)
(74) Mandataire: Grand, Guillaume

(57) **Abrégé**

Pour fabriquer un kilogramme d'un catalyseur de dénitrification, on prépare une suspension en mettant en contact, dans 4 à 20 litres d'eau, à la fois entre 200 et 800 grammes d'oxyde de titane divisé, présentant une forme anatase et ayant une surface spécifique comprise entre 70 et 400 m²/g, et un sel de manganèse (II) soluble et un sel de fer (III) soluble, dans des proportions telles que le rapport molaire manganèse/fer est compris entre 2 et 4 et dans des quantités telles que la proportion massique d'oxydes de fer et de manganèse est comprise entre 20 et 75% en poids du catalyseur fabriqué ; puis on opère une agitation de la suspension, dont la puissance volumique vaut au moins 0,5 kW par m³ de la suspension préparée ; puis, tout en maintenant cette agitation pendant au moins 15 minutes, on ajoute à la suspension une solution d'un agent précipitant et alcalin de façon à remonter le pH du mélange ainsi obtenu à une valeur comprise entre 8 et 9,5 ; puis on soumet ce mélange à une évaporation d'eau à une température comprise entre 80°C et 130°C ; puis on obtient le catalyseuren procédant à une calcination du produit résultant de l'évaporation d'eau, cette calcination étant réalisée pendant au moins une heure à une température comprise entre 400°C et600°C.

## Description

La présente invention concerne un procédé de fabrication d'un catalyseur de dénitrification. Elle concerne également un catalyseur de dénitrification, ainsi qu'un procédé de dénitrification catalytique de fumées, utilisant un tel catalyseur.

Les catalyseurs de dénitrification sont largement utilisés pour réduire les émissions d'oxydes d'azote, et ce dans un large domaine d'industries, parmi lesquelles l'industrie de l'incinération et celle de la production d'énergie.

La formulation la plus communément utilisée est un catalyseur structuré, à base d'oxyde de titane sous sa forme anatase, sur la base duquel sont déposés des principes actifs, tout particulièrement des oxydes de vanadium, tels que V₂O₅, et de tungstène, tels que W₂O₃. Ainsi, il est connu que pour réduire les oxydes d'azote, on associe à de tels catalyseurs l'introduction d'ammoniac de façon que les réactions entre l'ammoniac et les oxydes d'azote forment de l'azote, dénitrifiant ainsi les fumées.

Afin de travailler de façon satisfaisante et à une température limitée à moins de 400°C, le catalyseur et sa formulation jouent un rôle essentiel. A cet effet, le vanadium, sur une base d'oxyde de titane, est assez satisfaisant, comme indiqué dans JP-S-50128680 et JP-S-50168681.

De nombreuses formulations alternatives ont été proposées. Aussi, bien d'autres métaux peuvent être utilisés, comme l'argent (cf. US 8 062 617), l'indium (cf. US 7 850 935), le cuivre et/ou le fer, ou bien d'autres phases support, comme des zéolithes (cf. US 7 501 105) ou l'alumine (cf. US 6 703 343). D'autres associations sont également possibles, en particulier en associant des oxydes alcalino-terreux, comme BaO et CaO (cf. US 6 380 128).

On est toutefois systématiquement confronté à la problématique du coût lorsqu'on utilise des métaux précieux ou semi précieux, ou bien à la problématique d'une activité insuffisante à basse température lorsqu'on utilise le vanadium comme agent actif.

Il est en effet d'intérêt industriel particulier de pouvoir opérer à des températures aussi faibles que possible, et en particulier en deçà de 250°C, pour au moins deux raisons. D'une part, on limite la taille des réchauffeurs et équipements de récupération de l'énergie thermique en opérant à basse température, et, pour certaines applications, il est même possible de complètement omettre ceux-ci.

D'autre part, les catalyseurs ont une durée de vie limitée car ils sont sujets à une désactivation. Les fumées à traiter contiennent en général des poisons qui vont se fixer sur les sites actifs du catalyseur, ou bien des particules ou des sels qui vont bloquer les pores du catalyseur. Plusieurs moyens de réactiver les catalyseurs ou de prolonger leur durée de vie efficace ont été proposés. Il a été ainsi envisagé de régénérer thermiquement le catalyseur, comme dans EP 2 486 971, ou bien par des opérations de lavage avec ré-imprégnation, comme dans US 2001/012817 ou US 4 615 998. De tels procédés de régénération sont efficaces, mais l'activité qui est restaurée est égale ou, au mieux, un peu supérieure à l'activité initiale. Pour obtenir une activité élevée, on peut augmenter la teneur en vanadium. Les catalyseurs ordinaires contiennent de 2 à 4 % de vanadium, étant remarqué qu'il est possible de fabriquer des catalyseurs contenant jusqu'à environ 20% de vanadium. Toutefois, la préparation en est délicate et des effets secondaires indésirés apparaissent, comme une conversion excessive et néfaste du dioxyde de soufre en trioxyde de soufre, ou bien une stabilité ou une distribution spatiale du vanadium peu satisfaisante.

Par ailleurs, des catalyseurs bimétalliques ont été proposés : des études correspondantes ont montré une bonne activité, mais la charge effective en matière active reste faible et ces catalyseurs ne sont pas conçus pour des températures plus faibles que 250°C.

Enfin, d'autres approches pour préparer un catalyseur très actif reposent sur la préparation de structures très finement divisées, comme des nanoparticules. A cet égard, WO 2010/055169 enseigne comment préparer un tel catalyseur. Toutefois, sa fabrication industrielle est très couteuse.

De son côté, le document « TiO2-Supported Binary Metal Oxide Catalysts for Low-temperature Selective Catalytic Reduction of NOx with NH3 » (Wu Bi-jun et al, CHEMICAL RESEARCH IN CHINESE UNIVERSITIES, BEIJING, CN, vol. 24, no. 5, 1 septembre 2008 (2008-09-01), pages 615-619), qui peut être considéré comme l'état de la technique le plus proche de l'objet de la revendication 1 annexée, divulgue un procédé de fabrication d'un catalyseur supporté comprenant un coeur d'oxyde de titane en tant que support et une phase catalytiquement active constituée d'oxydes de fer et de manganèse. La phase catalytique est déposée par précipitation des précurseurs des oxydes de fer et de manganèse (sels solubles dans l'eau) au moyen d'une base (carbonate d'ammonium) sur les particules d'oxyde de titane dispersées dans l'eau. Ce catalyseur est utilisé dans un procédé pour la réduction catalytique à basse température des oxydes d'azote présents dans des gaz d'échappement. Dans ces cas, la proportion d'oxyde de titane ou, plus généralement, du support, par rapport aux agents actifs que sont les oxydes de fer et de manganèse, est importante, notamment pour bien disperser les agents actifs à la surface de l'oxyde de titane. Cela rend le catalyseur onéreux, en particulier lorsqu'on envisage d'utiliser de l'oxyde de titane sous une forme finement divisée et à grande surface spécifique.

Le but de la présente invention est de proposer un catalyseur économique et très actif pour la réduction catalytique des oxydes d'azote, particulièrement à une température d'utilisation de ce catalyseur comprise entre 140°C et 250°C.

A cet effet, l'invention a pour objet un procédé de fabrication d'un catalyseur de dénitrification, tel que défini à la revendication 1.

Ainsi, selon l'invention, un catalyseur destiné à la dénitrification de fumées par voie catalytique est préparé par une voie de déposition précipitation, accompagnée d'une agitation vigoureuse puis suivie d'un séchage et d'une calcination. Ce catalyseur est constitué par une base d'oxyde de titane divisé, sous sa forme anatase, sur laquelle sont déposés au moins du fer et du manganèse.

On notera qu'il est connu de l'art antérieur que des catalyseurs à base de manganèse, sur base d'oxyde de titane, peuvent être actifs à basse température. Il est également connu que l'adjonction de fer permet d'augmenter l'activité de tels catalyseurs. Toutefois, tous ces catalyseurs ont été préparés jusqu'ici par un mécanisme d'imprégnation simple ou bien par un mécanisme d'imprégnation assisté par un adjuvant comme l'acide citrique : bien que ces méthodes permettent de préparer des catalyseurs actifs pour la dénitrification de fumées par voie catalytique, la quantité de fer et de manganèse pouvant être déposée est limitée. Or, les éléments actifs de ces catalyseurs étant le fer et le manganèse, l'activité catalytique d'une masse donnée de catalyseur est directement impactée par la charge effective en éléments actifs, que l'on peut définir ici comme la fraction massique Fe + Mn, ramenée à la masse de catalyseur.

Ainsi, contrairement aux préparations proposées existantes, évoquées juste ci-dessus, l'invention utilise un mécanisme de déposition précipitation, opérée sous agitation vigoureuse, pour préparer le catalyseur, ce qui permet d'obtenir une charge en matière active importante, en l'occurrence une charge, exprimée par le rapport entre le poids des oxydes de fer et de manganèse, considérés sous leur forme Fe₂O₃ et Mn₂O₃, et le poids total final du catalyseur fabriqué, d'au moins 20 %, et ce qui fait que les oxydes métalliques présents à la surface du catalyseur sont sous forme essentiellement amorphe : le catalyseur fabriqué conformément au procédé selon l'invention est ainsi hautement actif, y compris à une température basse, c'est-à-dire une température comprise entre 140°C et 250°C, bien que rien n'intedise d'utiliser ce catalyseur à une température plus élevée.

En pratique, comme expliqué plus en détail par la suite, la forme finale du catalyseur fabriqué conformément au procédé selon l'invention peut être pulvérulente, ou bien structurée moyennant l'aménagement du procédé pour préparer une pâte à extruder.

Des caractéristiques additionnelles avantageuses du procédé de fabrication conforme à l'invention, sont spécifiées aux revendications 2 à 10.

L'invention a également pour objet un catalyseur de dénitrification, tel que défini à la revendication 11. Ce catalyseur est typiquement obtenu par le procédé de fabrication défini à la revendication 10. Suivant une caractéristique optionnelle de ce catalyseur, la proportion massique des oxydes de fer et de manganèse est comprise entre 40 et 75%, voire entre 45 et 75%, voire entre 50% et 75% en poids du catalyseur.

L'invention a en outre pour objet une utilisation d'un tel catalyseur de dénitrification, à savoir un procédé de dénitrification catalytique de fumées, tel que défini à la revendication 12.

L'invention sera mieux comprise à la lecture de la description qui va suivre, donnée uniquement à titre d'exemple et faite en se référant aux dessins sur lesquels :
- la figure 1 est un graphe relatif à l'activité de catalyseurs fabriqués conformément à l'invention, en fonction du rapport molaire Mn/Fe ; et
- la figure 2 est une vue analogue à la figure 1, relatif à des catalyseurs relevant de l'art antérieur.

Ci-après est décrit en détail un exemple de préparation d'un catalyseur selon un protocole conforme à l'invention. Ce protocole est donné pour la préparation de 1 kilogramme de catalyseur sous forme pulvérulente, étant remarqué que, comme décrit en détail plus loin, pour le cas où le catalyseur est souhaité sous forme structurée, un adjuvant d'extrusion sera ajouté.

Il est important de comprendre que la qualité de la matrice support de départ, à savoir l'oxyde de titane (TiO₂), sous forme anatase, est particulièrement importante, et tout spécialement l'état de division de cet oxyde, dont une mesure est la surface spécifique, exprimée en m² par gramme d'oxyde de titane. Selon l'invention, une plage pour ce paramètre est une valeur de cette surface spécifique comprise entre 70 et 400 m²/g. Des qualités convenables pour la base support sont les qualités commercialement connues sous les noms de « DT51 » et « G5 ».

Selon une des caractéristiques de l'invention, on met en contact, dans une quantité d'eau comprise entre 4 et 20 litres, de préférence entre 6 et 10 litres, une quantité comprise entre 200 et 800 grammes d'oxyde de titane finement divisé, présentant une forme anatase et dont la surface spécifique est comprise entre 70 et 400 m²/g, et un sel de manganèse (II) et un sel de fer (III), solubles, dans des proportions telles que :
- le rapport molaire manganèse/fer est compris entre 2 et 4, de préférence entre 2,5 et 3,5, étant remarqué que, à titre indicatif, une formulation Fe_{0,25}Mn _{0,75} correspond à un rapport de 3 ; et
- la quantité totale d'oxydes de fer et de manganèse, c'est-à-dire la quantité totale de manganèse et de fer exprimée sous la forme de leurs oxydes Fe₂O₃ et Mn₂O₃, est telle que le catalyseur final, tel qu'issu d'une étape finale de calcination décrite plus loin et incluant optionnellement un liant ajouté comme également décrit plus loin, contient entre 20 et 75% en poids d'oxydes de fer et de manganèse.

Il est connu que l'addition de fer renforce l'activité des catalyseurs associant du dioxyde de titane et du manganèse. Toutefois, il est nouveau d'obtenir un catalyseur présentant une charge en principes actifs Mn +Fe aussi élevée et qui présente aussi un caractère essentiellement amorphe pour ces espèces. Comme expliqué ci-après, ceci est permis par un protocole spécifique de déposition précipitation décrit ci-dessous, en étant avantageusement renforcé par une préconcentration.

D'une manière préférée, on utilise l'acétate de manganèse (II) tétrahydraté Mn(CH₃COO)₂,4H₂O, et le nitrate de fer (III) nonahydraté Fe(NOₐ)₃,9H₂O. D'autres sels peuvent convenir mais il est important que, lors de l'étape de calcination finale, ces sels ne laissent pas d'autres résidus que les oxydes des métaux correspondants. Ainsi, les sulfates ou les chlorures ne conviennent pas, mais des sels organiques, tels que les nitrates ou les acétates, peuvent convenir. En pratique, il est possible de préparer un sel comme l'acétate de manganèse, qui ne laisse pas de résidus néfastes à la calcination, en faisant réagir du carbonate de manganèse avec de l'acide acétique, ces deux constituants étant nettement moins chers que l'acétate de manganèse. Similairement, par réaction entre l'acide nitrique et le carbonate de manganèse, on peut préparer le nitrate de manganèse qui convient bien aussi.

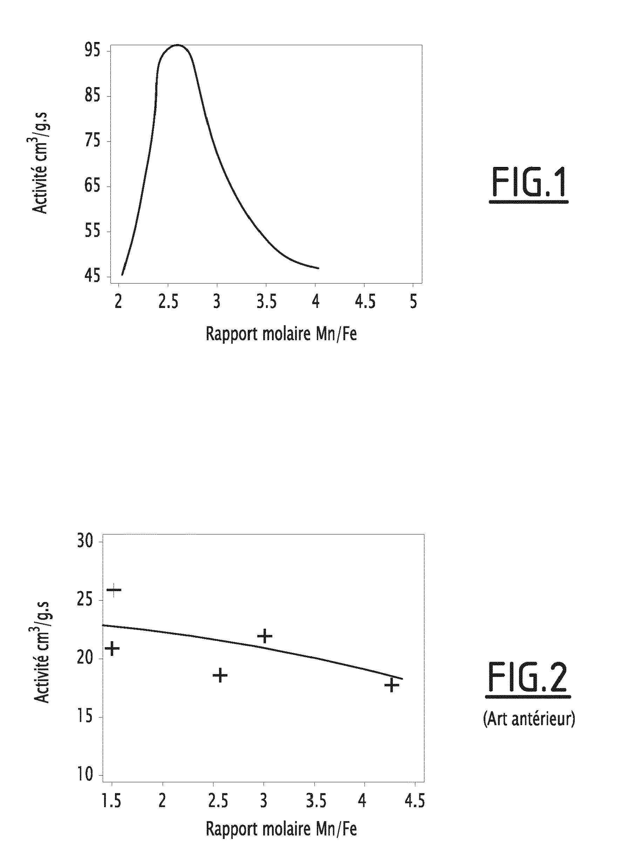

Il a été mis en évidence par les inventeurs que, de manière surprenante, lorsqu'on prépare le catalyseur avec un taux de charge important en matière active, l'activité passe par un maximum pour un ratio Mn/Fe compris entre 2 et 4, plus précisément entre 2,5 et 3,5. La figure 1 montre schématiquement cet effet, avec une courbe construite à partir de résultats obtenus avec des catalyseurs préparés selon le procédé conforme à l'invention et testés à 150°C pour leur activité.

A l'inverse, ce comportement n'est pas observé avec d'autres modes de dépôt du fer et du manganèse, et avec d'autres taux de charge en métaux, comme le montre la figure 2 pour des exemples de catalyseurs réalisés avec des opérations d'imprégnation conventionnelles. En particulier, on remarque qu'on ne constate pas d'extremum et que l'activité est beaucoup plus faible, typiquement d'un facteur trois, ce qui est significatif.

En pratique, l'ordre dans lequel l'oxyde de titane, le sel de fer (III) et le sel de manganèse (II) sont introduits n'est pas critique. Dans tous les cas, on obtient une suspension de couleur brune laiteuse, qui décante lentement.

Afin de réaliser la déposition précipitation de l'invention, on agite cette suspension de manière vigoureuse, à savoir avec une puissance volumique égale ou supérieure à 0,5 kW, voire à 0,7 kW, par m³ de suspension. Une telle agitation est par exemple réalisée dans une cuve agitée. Tout en continuant d'agiter avec au moins cette valeur de puissance volumique, on ajoute alors à cette suspension sous agitation une solution d'un agent précipitant alcalin, de façon à provoquer une précipitation sur les grains d'oxyde de titane. D'une manière préférée, on utilise une solution de carbamate d'ammonium (CAS 1111-78-0) ou le carbonate d'ammonium (CAS 10361-29-2). Là encore, d'autres agents alcalins de précipitation, tels que l'urée, l'hexaméthylènetétramine (HTMA), etc., peuvent convenir, étant entendu qu'il est important que, lors de l'étape de calcination finale, cet agent ne laisse pas de résidus solides. De manière préférée, on utilise une solution molaire de carbamate d'ammonium.

Lors de cette étape de précipitation, le pH de la suspension est amené à une valeur comprise 8 et 9,5, de manière préférée entre 8,9 et 9. La température de mélange est la température ambiante quand on utilise le carbamate d'ammonium comme précipitant, mais il n'est pas néfaste d'opérer une température plus élevée.

La solution d'agent précipitant doit être apportée graduellement. La durée totale de cette opération de mélange est d'au moins 15 minutes, et de préférence de 45 minutes voire davantage. Durant cette période, l'agitation du mélange obtenu est maintenue, avec au moins la valeur précitée de la puissance volumique, étant entendu que, en considérant que la puissance totale pour l'agitation est maintenue constante, l'effet de l'agitation par unité de volume du mélange progressivement obtenu diminue du fait de l'augmentation du volume de ce mélange. Dans tous les cas, la valeur minimale de la puissance volumique d'agitation, pendant toute l'opération de mélange, est égale à 0,5 kW par m³ de la suspension avant de commencer d'y ajouter l'agent précipitant.

Il a été constaté par les inventeurs que, de manière surprenante, les composés métalliques se formant, par ce mécanisme de déposition précipitation, en surface de la base d'oxyde de titane, présentent une forme essentiellement amorphe. De plus, en accompagnant cette déposition précipitation de l'agitation vigoureuse spécifiée plus haut, l'homogénéisation de la formation de ces composés métalliques est satisfaisante, en évitant la ségrégation des espèces en cours de déposition précipitation. Les performances du catalyseur en sont améliorées.

Selon l'invention, l'eau de la suspension est ensuite évaporée, à une température comprise entre 80°C et 130°C, pendant une durée d'au moins une heure. A la fin de cette étape de séchage, une poudre brune est obtenue.

De manière optionnelle mais bénéfique, l'étape de séchage décrite juste ci-dessus est précédée d'une étape de préconcentration au cours de laquelle la suspension résultant de la déposition précipitation est préconcentrée de manière à séparer un liquide clair et pauvre en catalyseur, d'une phase épaissie et riche en oxyde de titane sur lesquels se sont déposés le fer et le manganèse. Cette préconcentration est effectuée par des moyens connus en soi, comme des décanteurs, des épaississeurs ou des filtres à membrane. Cette préconcentration apporte un double bénéfice : d'une part, moins d'eau est à retirer lors des étapes subséquentes de séchage et de calcination, et, d'autre part, la quantité de sels solubles résiduels avant retrait de l'eau, tel que des nitrates, des acétates, etc., est moindre, ce qui réduit l'activité de ces espèces et augmente l'activité du catalyseur final.

A titre d'exemple, deux catalyseurs ont été préparés conformément à l'invention, à savoir avec un rapport molaire Mn/Fe égal à 3 et avec une quantité totale d'oxydes de fer et de manganèse égale à 25% en poids des catalyseurs, mais l'un des deux a été préparé avec une étape de préconcentration, tandis que l'autre a été préparé sans : en mesurant l'activité spécifique de ces catalyseurs, sur un test en lit fixe, à 150°C, il ressort que le catalyseur préparé avec une étape de préconcentration présente une activité égale à 127,8 cm³/g.s tandis que le catalyseur préparé sans l'étape de préconcentration présente une activité spécifique égale à 96,6 cm³/g.s. Cet exemple montre clairement l'effet bénéfique de la décantation mise en oeuvre lors de l'étape optionnelle de préconcentration. Bien entendu, cet effet bénéfique en lien avec la décantation se retrouve plus généralement pour la proportion massique d'oxydes de fer et de manganèse visée par l'invention.

Selon l'invention, on procède ensuite à une calcination qui a pour but de décomposer les sels et le produit de précipitation pour former des oxydes de fer et de manganèse. En pratique, il est considéré que ces oxydes sont sous forme Fe₂O₃ et Mn₂O₃. Cette opération de calcination doit être réalisée en milieu oxydant, à une température d'au moins 400°C et d'au plus 600°C, depréférence entre 450°C et 500°C. La durée de cette opération de calcination est d'au moins deux heures, de préférence de quatre heures.

On obtient ainsi le catalyseur, qui, comme expliqué ci-dessus, présente une charge en élément actif, à savoir en fer et en manganèse, qui est élevée, ces espèces se présentant sous forme essentiellement amorphe.

La poudre calcinée, résultant de l'opération de calcination et constituant le catalyseur, peut être utilisée telle quelle, c'est-à-dire sous forme pulvérulente, dans un réacteur gaz-solides d'une technologie connue en soi.

Ceci étant, le catalyseur fabriqué conformément à l'invention est, de manière préférée, utilisé sous forme structurée, par exemple en canaux, autrement dit sous une forme similaire par sa présentation aux catalyseurs classiques de dénitrification, à base de vanadium. Pour obtenir une forme structurée pour le catalyseur, une possibilité opératoire consiste à ce que la poudre calcinée précitée est incorporée à un agent liant, par exemple de l'argile, de la sépiolite ou de la bentonite de manière non limitative, avec de l'eau. La pâte ainsi préparée est ensuite extrudée et, de manière classique, séchée et/ou calcinée.

Par rapport aux catalyseurs traditionnels à base de vanadium, le catalyseur préparé conformément à l'invention présente plusieurs avantages, parmi lesquels :
- les métaux mis en oeuvre, à savoir le fer et le manganèse, sont peu toxiques par comparaison au vanadium et au tungstène ; cela en facilite la manufacture et rend leur manipulation plus aisée ;
- l'activité à basse température du catalyseur conforme à l'invention est bien plus importante ; ce catalyseur est conçu pour être utilisé entre 140°C et 250°C, bien que rien n'interdise de l'utiliser à une température plus élevée ;
- de par l'absence de métaux couteux, le catalyseur conforme à l'invention est bon marché à produire ; et
- le taux de conversion du dioxyde de soufre en trioxyde soufre par le catalyseur conforme à l'invention est faible, notamment inférieur à 2% à 150°C.

### Premier exemple :

L'exemple ci-dessous détaille les étapes conduisant à la préparation d'environ 1 kilogramme d'un catalyseur pulvérulent, actif à basse température, notamment à 140°C.

Dans 12 litres d'eau, on dissout 1280 grammes d'acétate de manganèse tétrahydraté et 700 grammes de nitrate ferrique nonahydraté.

On ajoute 250 grammes de dioxyde de titane, sous sa forme anatase, de qualité dite « DT51 », à 90 m²/g de surface spécifique. On agite cette suspension, de couleur beige, pendant 10 minutes, avec une puissance volumique supérieure à 0,5 kW/m³.

On ajoute alors progressivement environ 18 litres d'une solution molaire de carbamate d'ammonium. Le volume de solution utilisé est déterminé de façon que le pH final soit compris entre 8,9 et 9, à température ambiante. L'agitation est maintenue pendant une durée de 40 minutes, avec la même agitation.

On laisse décanter la suspension de manière à séparer environ la moitié d'un surnageant, clair, qui est éliminé. La phase inférieure, qui contient le titane, est récupérée et est mise à sécher pendant 2 heures, dans une étuve à 110°C, de manière à évaporer sensiblement toute l'eau.

Le produit solide, pulvérulent, est alors récupéré et est ensuite calciné, dans une atmosphère d'air, à 450°C, pendant quatre heures. On mélange ensuite cette poudre avec 250 grammes de bentonite.

On obtient ainsi un catalyseur actif à basse température, destiné à être extrudé et ayant la composition finale suivante (base totale massique) :
- 55% d'oxydes de fer et de manganèse, avec un ratio Mn/Fe égal à 3,
- 25% d'oxyde de titane, et
- 20% de liant.

### Second exemple :

Cet exemple de catalyseur conforme à l'invention est destiné à être utilisé sous forme pulvérulente et donc sans liant. Il est préparé comme suit :
Dans 4 litres d'eau, on dissout 600 grammes d'acétate de manganèse tétrahydraté et 285 grammes de nitrate ferrique nonahydraté.

On ajoute 750 grammes de dioxyde de titane, sous sa forme anastase, de qualité dite « DT51 », à 90 m²/g de surface spécifique. On agite cette suspense, de couleur beige, pendant 10 minutes, avec une puissance volumique supérieure à 0,5 kW/m³.

On ajoute alors progressivement environ 8,5 litres d'une solution molaire de carbamate d'ammonium. Le volume de solution de solution utilisé est déterminé de façon que le pH final soit compris entre 8,9 et 9, à température ambiante. L'agitation est maintenue pendant une durée de 40 minutes, avec la même agitation.

On laisse décanter la suspension de manière à séparer environ la moitié d'un surnageant, clair, qui est éliminé. La phase inférieure, qui contient le titane, est récupérée et est mise à sécher pendant 2 heures, dans une étude à 110°C, de manière à évaporer sensiblement toute l'eau.

Le produit solide, pulvérulent, est alors récupéré et est ensuite calciné, dans une atmosphère d'air, à 450°C, pendant quatre heures.

Le catalyseur, constitué de la poudre calcinée, a la composition finale suivante (base totale massique) :
- 25% d'oxydes de fer et de manganèse, avec un ratio Mn/Fe égal à 3,5, et
- 75% d'oxyde de titane.

## Revendications

1. Procédé de fabrication d'un catalyseur de dénitrification,
dans lequel, pour fabriquer un kilogramme du catalyseur :
- on prépare une suspension en mettant en contact, dans 4 à 20 litres d'eau, à la fois :
- entre 200 et 800 grammes d'oxyde de titane divisé, présentant une forme anatase et ayant une surface spécifique comprise entre 70 et 400 m²/g, et
- un sel de manganèse (II) soluble et un sel de fer (III) soluble, dans des proportions telles que le rapport molaire manganèse/fer est compris entre 2 et 4, de préférence entre 2,5 et 3,5, et dans des quantités telles que la proportion massique d'oxydes de fer et de manganèse est comprise entre 20 et 75 % en poids dudit catalyseur fabriqué, puis
- on opère une agitation de la suspension, dont la puissance volumique vaut au moins 0,5 kW par m³ de la suspension préparée, puis
- tout en maintenant cette agitation pendant au moins 15 minutes, de préférence pendant au moins 45 minutes, on ajoute à la suspension une solution d'un agent précipitant et alcalin de façon à remonter le pH du mélange ainsi obtenu à une valeur comprise entre 8 et 9,5, puis
- on soumet le mélange à une évaporation d'eau à une température comprise entre 80°C et 130°C, puis
- on obtient ledit catalyseur fabriqué en procédant à une calcination du produit résultant de l'évaporation d'eau, cette calcination étant réalisée pendant au moins une heure à une température comprise entre 400°C et 600°C, de préférence pendant au moins 4 heures à une température comprise entre 450 ° C et 500 ° C.

2. Procédé selon la revendication 1, dans lequel, après avoir ajouté la solution d'agent précipitant et maintenu ladite agitation, on préconcentre le mélange de façon à séparer d'une phase claire une phase épaissie, qui contient le catalyseur et à laquelle on applique l'évaporation d'eau.

3. Procédé selon l'une des revendications 1 ou 2, dans lequel l'évaporation d'eau du mélange est réalisée jusqu'à obtenir une poudre à laquelle on applique la calcination.

4. Procédé selon la revendication 3, dans lequel, après avoir calciné la poudre, on prépare une pâte en mélangeant la poudre calcinée, de l'eau et un agent liant, puis la pâte préparée est extrudée pour obtenir le catalyseur sous une forme structurée.

5. Procédé selon la revendication 4, dans lequel l'agent liant est une argile, de la sépiolite ou de la bentonite.

6. Procédé selon l'une quelconque des revendications précédentes, dans lequel la puissance volumique de ladite agitation vaut au moins 0,7 kW par m³ de la suspension préparée.

7. Procédé selon l'une quelconque des revendications précédentes, dans lequel l'agent précipitant est du carbamate d'ammonium ou du carbonate d'ammonium.

8. Procédé selon l'une quelconque des revendications précédentes, dans lequel le sel de manganèse (II) est de l'acétate de manganèse (II) tétrahydraté.

9. Procédé selon l'une quelconque des revendications précédentes, dans lequel le sel de fer (III) est du nitrate de fer (III) nonahydraté.

10. Procédé selon l'une quelconque des revendications précédentes, dans lequel, dans la suspension préparée, les quantités du sel de manganèse (II) et du sel de fer (III) sont telles que la proportion massique des oxydes de fer et de manganèse est comprise entre 36 et 75% en poids du catalyseur fabriqué.

11. Catalyseur de dénitrification, comportant des oxydes de fer et de manganèse sous forme essentiellement amorphe, déposés sur une base d'oxyde de titane sous forme anatase, dans lequel le rapport molaire manganèse/fer est compris entre 2 et 4, de préférence entre 2,5 et 3,5, et dans lequel la proportion massique des oxydes de fer et de manganèse est comprise entre 36 et 75% en poids du catalyseur.

12. Procédé de dénitrification catalytique de fumées, dans lequel un catalyseur, fabriqué conformément au procédé selon l'une des revendications 1 à 10 ou bien conforme à la revendication 11, est utilisé à une température comprise entre 140°C et 250°C pour dénitrifier les fumées.
